# EUROPEAN PATENT APPLICATION

(11) **EP 4 711 635 A1**
(43) Date of publication of application: **18.03.2026**
(21) Application number: 24200240.0
(22) Date of filing: 13.09.2024
(51) Int. Cl.: F16C 35/04, F16C 35/02

(54) **BEARING HOUSING FOR RECEIVING AND ROTATIONALLY SUPPORTING A ROTARY SHAFT OF AN AGITATOR SYSTEM, AGITATOR SYSTEM, MIXING ARRANGEMENT AND METHOD OF MOUNTING A BEARING HOUSING**

(71) Applicant: Alfa Laval Corporate AB, 221 00 Lund (SE)
(72) Inventor: THORØE-BJERRISGAARD, Søren, DK-6580 VAMDRUP (DK); GAARDSTED, Poul, DK-2800 KONGENS LYNGBY (DK)
(74) Representative: Alfa Laval Attorneys

(57) **Abstract**

The present invention relates to a bearing housing (100) for receiving and rotationally supporting a rotary shaft (12) of an agitator system (10) in relation to an opening (52) in a vessel (50). The bearing housing (100) comprising: a body (102) comprising a shaft aperture (104) configured to receive the rotary shaft (12) and being at least partially defined by an internal surface (110) configured to rotationally support the rotary shaft (12) via one or more bearings. The bearing housing (100) comprises two or more protrusions (120) protruding from a first end portion (106) and being circumferentially distributed around the shaft aperture (102), each protrusion (120) comprising an abutment surface (122) facing away from the first end portion (106) and being configured to abut an outer surface portion (56) associated with the vessel (50), such that a radially extending passage (121) allowing access to the rotary shaft (12) is formed between adjacent protrusions (120) when the abutment surfaces (122) abut the outer surface portion (56) associated with the vessel (50).

## Description

### Technical Field

The invention relates to the field of agitators. More particularly, it is related to a bearing housing for receiving and rotationally supporting a rotary shaft of an agitator system extending into a vessel through an opening in the vessel at an interface between the opening and the rotary shaft; an agitator system comprising the bearing housing; a mixing arrangement comprising the agitator system; and a method of mounting a bearing housing.

The bearing housing comprises a shaft aperture configured to receive a rotary shaft. The bearing housing is configured to rotationally support the rotary shaft via one or more bearings.

### Background Art

Agitators are used in numerous applications. In for example, the food industry, the pharma industry, and the chemical industry, mixing tanks including agitators are used in various processing operations where a product or similar held in a mixing tank is to be mixed or agitated. Agitators are commonly used where two or more constituents are to be mixed. Further, agitators are commonly used for preventing solids or particles dispersed in a liquid from floating to the surface or from sinking to the bottom.

Agitators for tanks typically include a rotatable shaft which is provided with one or more impellers or agitator blades used to agitate a product held in a tank.

Sometimes it is desirable to install the rotatable shaft in the tank already when fabricating the tank at the tank builder's site. This may for instance be the case when there is limited space at the final location of the tank or when the rotatable shaft is to be provided with one or more large impellers which are hard to mount at the final location of the tank. In such cases, it is common practice to install more delicate parts of the agitator, such as the motor and bearings, at the final location of the tank. This means that the rotatable shaft will have to be fixed in relation to the tank during transportation of the tank to its final location, or else the tank and the rotatable shaft risk getting damaged during the transportation. When the tank has been positioned at its final location, the other components of the agitator are typically mounted to the shaft while the shaft is still fixed in relation to the tank.

Not only is it troublesome and time consuming to fix the rotatable shaft in relation to the tank during fabrication of the tank, but it is also tricky and time consuming to attach the rotatable shaft to the other components of the agitator when the rotatable shaft is fixed in relation to the tank.

Similarly, when an agitator is serviced, it is common practice to remove the motor and other wear parts, while leaving the rotatable shaft and its impellers in the tank. Also in such cases, the rotatable shaft will have to be fixed in relation to the tank. If the rotatable shaft is not fixed properly in relation to the tank, there is a risk that the shaft risks falling into the tank, potentially damaging the tank and the rotatable shaft.

Not only is it troublesome and time consuming to fix the rotatable shaft in relation to the tank during service of the agitator, but it is also tricky and time consuming to attach the rotatable shaft to the other components of the agitator when the service has been completed and the agitator is to be put back into service.

Given the above, there is an outspoken desire to provide a solution for simplifying the building of tanks in which the rotatable shaft is already present when manufacturing the tank.

Further, there is an outspoken desire to provide a solution for simplifying the service of an agitator.

### Summary

With the above in mind, it is an objective of the present invention to provide bearing housing for receiving and rotationally supporting a rotary shaft of an agitator system extending into a vessel through an opening in the vessel at an interface between the opening and the rotary shaft, as well as an agitator system for mixing a liquid product held in a vessel; a mixing arrangement for mixing a liquid product; and a method of mounting a bearing housing.

Another objective is to provide such bearing housing which simplifies mounting of the bearing housing in case the rotary shaft is fixed to the vessel.

Another objective is to provide such bearing housing which is less labor-intensive to mount.

Another objective is to provide such bearing housing which simplifies mounting of other components of the agitator.

Another objective is to provide such bearing housing which simplifies servicing of the agitator.

Another objective is to provide such bearing housing which results in a less labor-intensive service of the agitator.

Another objective is to provide such bearing housing which allows access to the rotary shaft even after the bearing housing has been installed and mounted to the vessel.

Another objective is to provide such bearing housing which is cost-effective.

To achieve at least one of the above objects and also other objects that will be evident from the following description, a bearing housing for receiving and rotationally supporting a rotary shaft of an agitator system extending into a vessel through an opening in the vessel at an interface between the opening and the rotary shaft, having the features defined in claim 1 is provided according to the present inventive concept. An agitator system for mixing a liquid product held in a vessel comprising the bearing housing is provided according to claim 15. A mixing arrangement for mixing a liquid product comprising the agitator system is provided according to claim 16. A method mounting a bearing housing at an interface between an opening in a vessel and a rotary shaft extending into the vessel through the opening is provided according to claim 17.

More specifically, according to a first aspect, there is provided a bearing housing for receiving and rotationally supporting a rotary shaft of an agitator system extending into a vessel through an opening in the vessel at an interface between the opening and the rotary shaft, the bearing housing comprising:
a body comprising a shaft aperture extending along an axial direction of the body between a first end portion and a second end portion of the body, the shaft aperture being configured to receive the rotary shaft, and being at least partially defined by an internal surface at least partially circumscribing the shaft aperture, wherein the internal surface is configured to rotationally support the rotary shaft via one or more bearings, and
two or more protrusions protruding from the first end portion along the axial direction, and being circumferentially distributed around the shaft aperture, each protrusion comprising an abutment surface facing away from the first end portion as seen along the axial direction and being configured to abut an outer surface portion associated with the vessel, such that a radially extending passage allowing access to the rotary shaft is formed between adjacent protrusions when the abutment surfaces abut the outer surface portion associated with the vessel.

Hereby an improved bearing housing for an agitator system is provided. More specifically, hereby an improved bearing housing for receiving and rotationally supporting a rotary shaft of an agitator system extending into a vessel through an opening in the vessel at an interface between the opening and the rotary shaft is provided.

The bearing housing is designed for and hence suitable for receiving and rotationally supporting a rotary shaft of an agitator system extending into a vessel through an opening in the vessel at an interface between the opening and the rotary shaft. Thus, the bearing housing is designed for and hence suitable for holding and supporting a rotary shaft of an agitator system in relation to an opening of a vessel.

It should be noted that within the context of this application the term "shaft aperture" may mean any aperture or opening, of a body, hosing or similar, of the bearing housing which is configured to receive a rotary shaft therethrough or partially therethrough. This means that the rotatable shaft may be connected to a drive unit, configured to rotate the rotary shaft, from one end of the shaft aperture, whereas the rotary shaft may continue into the opening of the vessel via the other, opposite, end of the shaft aperture.

To this end, the bearing housing may generally be designed for supporting such a drive unit in relation to an opening of a vessel. However, the drive unit may alternatively be supported directly by the vessel, i.e. without any interaction with the bearing housing.

By the shaft aperture being at least partially defined by an internal surface at least partially circumscribing the shaft aperture, where the internal surface is configured to rotationally support the rotary shaft via one or more bearings, the body of the bearing housing may support and hold a rotary shaft in relation to the bearing housing in a way where the rotary shaft may be rotated about itself.

By the bearing housing comprising two or more protrusions protruding from a first end portion of the body, where the two or more protrusions are circumferentially distributed around the shaft aperture, a radially extending passage allowing access to the rotary shaft will be formed between adjacent protrusions when the bearing housing abuts or is mounted to an outer surface portion associated with the vessel.

More specifically, each protrusion comprises an abutment surface facing away from the first end portion of the body as seen along the axial direction of the body. Each abutment surface is configured to abut an outer surface portion associated with the vessel, such that a radially extending passage allowing access to the rotary shaft is formed between adjacent protrusions when the abutment surfaces abut the outer surface portion associated with the vessel.

The "outer surface portion associated with the vessel" may be any outer surface portion or surface of the vessel itself or may be any surface portion or surface connected to the vessel, such as a surface or surface portion of a flange or duct section connected to the vessel. Further, the outer surface portion associated with the vessel will generally in practice be a surface portion or surface relatively speaking adjacent to the opening in the vessel. Further, the outer surface portion associated with the vessel will in practice circumscribe or partially circumscribe the opening in the vessel such that the abutment surfaces of the circumferentially distributed protrusions may abut the outer surface portion associated with the vessel. Thus, the abutment surfaces of the circumferentially distributed protrusions may abut the outer surface portion associated with the vessel around the opening in the vessel.

By the formation of a radially extending passage allowing access to the rotary shaft between adjacent protrusions, significant advantages are achieved.

For instance, the bearing housing may be positioned or mounted on the vessel with the abutment surfaces abutting the outer surface portion associated with the vessel while the rotary shaft is fixed in relation to the opening of the vessel by for instance a tool or a set of tools located outside of the vessel. Such tools may for instance be a set of fixture elements configured to jointly fix the rotary shaft in relation to the opening. This is made possible e.g. by positioning the bearing housing such that a respective tool used to fix the rotary shaft is received in the radially extending passages between the protrusions of the bearing housing. Thus, the bearing hosing may be mounted to the vessel and the rotary shaft may be mounted to the bearing hosing via one or more bearings while the rotary shaft is fixed from the outside of the vessel.

This is in great contrast to common practice, where the rotary shaft typically is fixed in relation to the vessel by a temporary fixture made of planks or similar simple material. In such case, the rotary shaft will typically have to be fixed from within the vessel or else the fixture will in the way when positioning the bearing housing at the vessel. Thus, the bearing housing enables a significantly more efficient and easy positioning and mounting to the vessel.

Further, such tools may be removed via the radially extending passages subsequent to mounting the bearing housing to the vessel and the rotary shaft to the bearing hosing via one or more bearings. Thus, the bearing housing enables a safe and simple mounting during which the rotary shaft may be fixed in relation to the vessel in an improved way.

Furthermore, since the rotary shaft may be accessed via the radially extending passages when the bearing housing is mounted to the vessel, tools, e.g. in form of fixture elements, may be mounted to fix the rotary shaft from the outside of the vessel when the agitator is to be serviced. In this way, the service may be significantly simplified and less time-consuming.

The two or more protrusions may have any suitable shape.

The two or more protrusions may have any suitable extension along the axial direction of the body.

The abutment surface may have any suitable size.

The abutment surface may have any suitable shape.

The abutment surface may include a steering notch configured to be positioned in the opening in the vessel. In this way, positioning of the bearing housing in relation to the opening in the vessel may be facilitated.

The body and the two or more protrusions may be integrally formed, which is advantageous in that a strong bearing housing with no loose parts may be formed. Hence, the risk of misplacing or losing otherwise loose parts may be eliminated.

The body and the two or more protrusions may be machined from a metal material, such as aluminum, an alloy steel or a stainless steel, which is advantageous in that a strong and sturdy bearing housing may be formed.

The abutment surface may be configured to be connected to and bear against a flange circumscribing the opening in the vessel, which is advantageous in that a sturdy direct contact may be established between the bearing housing and the vessel via the flange.

The flange may be integrally formed with the vessel.

The flange may be welded to the vessel.

The flange may be fixed to the vessel, e.g. by screws, bolts, rivets or similar.

Each protrusion may comprise an attachment hole extending along the axial direction, the attachment hole being configured to receive an attachment screw for attaching the bearing housing to the vessel, which is advantageous in that the bearing housing may be releasably attached or fixed in relation to the vessel.

Each passage may be configured to receive a tool, such as a fixture element, for holding the rotary shaft in relation to the vessel, which is advantageous in that it enables that the rotary shaft may be releasably held or fixed in relation to the vessel in a secure manner from the outside of the vessel.

Each tool may be a respective fixture element. The tools or fixture elements may be configured to jointly fix the rotary shaft in relation to the opening by engaging the rotary shaft such that the rotary shaft is clamped between the tools or fixture elements. Thus, a tool or fixture element may be received in each radially extending passage, such that the tools or fixture elements access the rotary shaft via the radially extending passages.

Each protrusion may extend over an angle in a range of 20 to 90 degrees, such as 50 to 80 degrees, as seen from a central axis of the bearing housing in a plane perpendicular to the axial direction, which is advantages in that a strong connection between the bearing housing and the vessel may be achieved while still providing an adequate access to the rotary shaft via the radially extending passages.

Each protrusion may extend over an angle in a range of 150 to 170 degrees, such as 160 degrees, as seen from a central axis of the bearing housing in a plane perpendicular to the axial direction, which is advantages in that a strong connection between the bearing housing may be achieved while still providing an adequate access to the rotary shaft via the radially extending passages in case the bearing housing has two protrusions.

Each protrusion may have an extension along the axial direction in a range of 20 mm to 100 mm, such as 30 mm to 60 mm, which is advantageous in that the radially extending passages may, when being formed, have an extension along the axial direction to allow an adequate access to the rotary shaft. Thus, the extension of the of each protrusion along the axial direction in the above range may allow for that a tool for holding the rotary shaft in relation to the vessel may be received via the radially extending passages.

To this end, it may be noted that the rotary shaft may typically have a diameter in a range of 20-120 mm. The extension of the of each protrusion along the axial direction may to advantage be adapted to the diameter of the rotary shaft at hand. For instance, the extension of the of each protrusion along the axial direction may for a 40 mm diameter rotary shaft be 42 mm.

The shaft aperture may have a circular cross-section as seen along the axial direction, which is advantageous in that it facilitates supporting the rotary shaft via one or more bearings or bearing assemblies.

The internal surface may comprise a first internal surface portion circumscribing the shaft aperture, wherein the first internal surface portion is configured to bear against a first bearing assembly for rotationally supporting the rotary shaft, which is advantageous in that a rigid connection may be achieved between the bearing housing and the first bearing assembly. In this way, the rotary shaft may be firmly rotationally supported in relation to the bearing housing.

It is to be noted that a "bearing assembly" may comprise more than one bearing and also further elements. Such further element may for instance be a housing configured to hold one or more bearings.

The internal surface may comprise a second internal surface portion circumscribing the shaft aperture, the second internal surface portion being arranged at a distance from the first internal surface portion along the axial direction, wherein the second internal surface portion is configured to bear against a second bearing assembly for rotationally supporting the rotary shaft. In this way, the rotary shaft may be firmly rotationally supported in relation to the bearing housing in a way where the rotary shaft may be subjected to significant lateral forces while not notably laterally biasing or skewing the bearing assemblies.

The body may, for each protrusion, comprise a radially outer reinforcement rib extending along the axial direction between an axial position of the first internal surface portion and an axial position of the second internal surface portion, which is advantageous in that the body, and hence the bearing housing, may be reinforced between locations where the body receives a majority of the forces from the rotary shaft. Thus, the body as such may be made stronger and more rigid while using a limited amount of additional material.

A central axis of a reinforcement rib may coincide with a central axis of an associated protrusion as seen along the axial direction, which is advantageous in that the overall strength of the bearing housing may be improved. Further, forces from the rotary shaft may be efficiently distributed throughout the bearing housing.

The two or more protrusions may comprise three or more protrusions, which is advantageous in that the bearing hosing may be firmly mounted to the vessel. The three or more protrusions may thus enable that the bearing housing is less prone to being bent or being flexed at the interface between the abutment surfaces and outer surface portion associated with the vessel. Further, the three or more protrusions may thus enable that a set of tools, e.g. comprising three or more fixture elements, may be used to jointly fix the rotary shaft in relation to the opening in a firm manner where the rotary shaft is firmly fixed in any direction.

The two or more protrusions may be three protrusions.

According to another aspect of the invention, there is provided an agitator system for mixing a liquid product held in a vessel, the agitator system comprising:
a rotary shaft provided with one or more impellers configured to mix the liquid product,
a drive unit coupled to the rotary shaft and configured to rotate the rotary shaft, and
a bearing housing according to the first aspect, the bearing housing receiving and rotationally supporting the rotary shaft at an interface between an opening in the vessel and the rotary shaft and supporting the drive unit.

In general, features of this aspect provide similar advantages as discussed above in relation to the first aspect. Consequently, said advantages will not be repeated in order to avoid undue repetition.

According to another aspect of the invention, there is provided a mixing arrangement for mixing a liquid product, the mixing arrangement comprising:
a vessel configured to hold the liquid product, and
an agitator system according to the previous aspect, wherein the rotary shaft extends into the vessel through the opening such that the one or more impellers are located in the vessel, and the drive unit is located outside of the vessel.

In general, features of this aspect provide similar advantages as discussed above in relation to the first aspect. Consequently, said advantages will not be repeated in order to avoid undue repetition.

According to another aspect of the invention, there is provided a method of mounting a bearing housing according to the first aspect at an interface between an opening in a vessel and a rotary shaft extending into the vessel through the opening, wherein the rotary shaft is releasably fixed in relation to the opening by two or more tools, such as fixture elements, circumferentially distributed around the opening and jointly fixing the rotary shaft in relation to the opening, the method comprising:
positioning the bearing housing at the opening such that the rotary shaft is received at the shaft aperture, and each abutment surface abuts an outer surface portion associated with the vessel, and a respective tool is received in each radially extending passage being formed between adjacent protrusions, and
fixing the bearing housing to the vessel, thereby rotationally supporting the rotary shaft.

In general, features of this aspect provide similar advantages as discussed above in relation to the first aspect. Consequently, said advantages will not be repeated in order to avoid undue repetition.

A further scope of applicability of the present invention will become apparent from the detailed description given below. However, it should be understood that the detailed description and specific examples, while indicating preferred embodiments of the invention, are given by way of illustration only, since various changes and modifications within the scope of the invention will become apparent to those skilled in the art from this detailed description.

Hence, it is to be understood that this invention is not limited to the particular component parts of the device described as such device may vary. It is also to be understood that the terminology used herein is for purpose of describing particular embodiments only and is not intended to be limiting. It must be noted that, as used in the specification and the appended claim, the articles "a," "an," "the," and "said" are intended to mean that there are one or more of the elements unless the context clearly dictates otherwise. Thus, for example, reference to "a unit" or "the unit" may include several devices, and the like. Furthermore, the words "comprising", "including", "containing" and similar wordings does not exclude other elements or steps.

Thus, throughout this specification, unless the context requires otherwise, the word "comprise" or variations such as "comprises" or "comprising", will be understood to imply the inclusion of a stated integer or group of integers but not the exclusion of any other integer or group of integers.

### Brief Description of the Drawings

The above and other aspects of the present inventive concept will now be described in more detail, with reference to appended figures showing embodiments or variants of the inventive concept. The figures should not be considered limiting, instead, they are used for explaining and understanding.

As illustrated in the figures, the sizes of details, layers and regions may be exaggerated for illustrative purposes and, thus, are provided to illustrate the general structures of variants. Like reference numerals refer to like elements throughout.
Fig. 1A is a schematic partial cross-sectional view of mixing arrangement having a top mounted agitator system attached to a vessel.
Fig. 1B is a schematic partial cross-sectional view of mixing arrangement having a side mounted agitator system attached to a vessel.
Fig. 2 is a perspective detailed view of a bearing housing according to the present inventive concept.
Fig. 3 is an image sequence showing how a bearing housing is mounted to a vessel already provided with a rotary shaft fixed in relation to the vessel.
Fig. 4 is a flow chart of a method of mounting a bearing housing at an interface between an opening in a vessel and a rotary shaft extending into the vessel through the opening.

### Detailed Description

The present inventive concept will now be described more fully hereinafter with reference to the accompanying drawings, in which currently preferred variants or embodiments of the inventive concept are shown. This inventive concept may, however, be implemented in many different forms and should not be construed as limited to the variants set forth herein; rather, these variants are provided for thoroughness and completeness, and fully convey the scope of the present inventive concept to the skilled person.

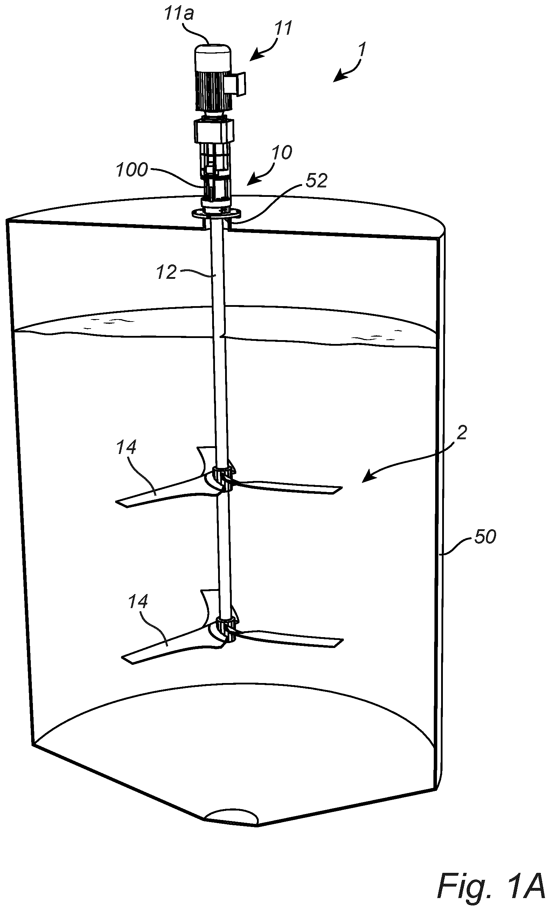

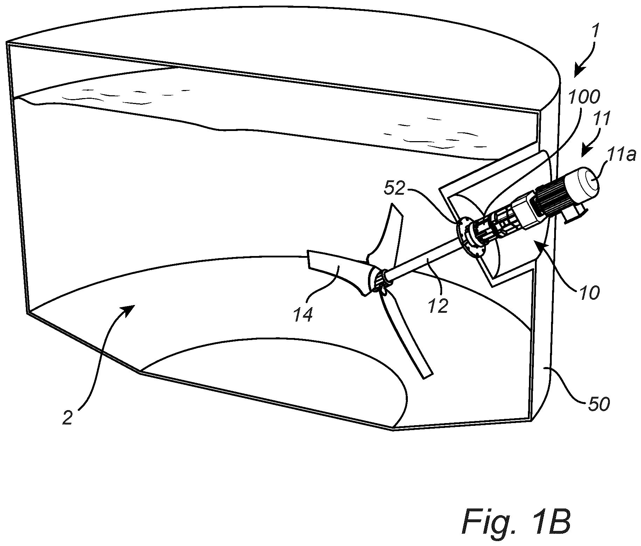

Initially two set-ups of mixing arrangements 1 will be briefly described with reference to Figs. 1A and 1B. Each mixing arrangement 1 comprises an agitator system 10 and a vessel 50.

Agitator systems 10 is, as known in the art, used to mix, agitate or blend a product 2 or similar held in the vessel 50. Thus, the general function of the mixing arrangement 1 and its agitator system 10 will not be described in detail hereinafter. Each agitator system 10 has a rotary shaft 12 which extends into its associated vessel 50, such as a stainless tank or similar, through an opening 52 in the vessel 50.

The rotary shaft 12 of the agitator system 10 of Fig. 1A is provided with two impellers 14 configured to agitate, mix or blend a product 2, such as a liquid product 2, held in the vessel 50.

The rotary shaft 12 of the agitator system 10 of Fig. 1B is provided with one impeller 14 configured to agitate, mix or blend a product 2, such as a liquid product 2, held in the vessel 50.

Each agitator system 10 has a drive unit 11 including an electrical motor 11a that transmits the energy required for agitating, mixing, and blending the product 2, either directly or via a gearbox, to the rotary shaft 12 shaft. As the rotary shaft 12 rotates, the impellers 14 are turned. The impeller movement typically creates a high flow of the product 2 with low shear due to a highly effective axial pumping effect on the product 2 in the vessel 50. This results in effective agitating, mixing or blending of the entire contents, i.e. the product 2 of the vessel 50.

The agitator system 10 of Fig. 1A is similar to the agitator system 10 of Fig. 1B. However, the agitator system 10 of Fig. 1A is top-mounted, whereas the agitator system 10 of Fig. 1B is side-mounted. This mean that the rotary shaft 12 of the agitator system 10 of Fig. 1A extends into the vessel in a downwards vertical direction, whereas the rotary shaft 12 of the agitator system 10 of Fig. 1B extends into the vessel in a downwards oblique direction.

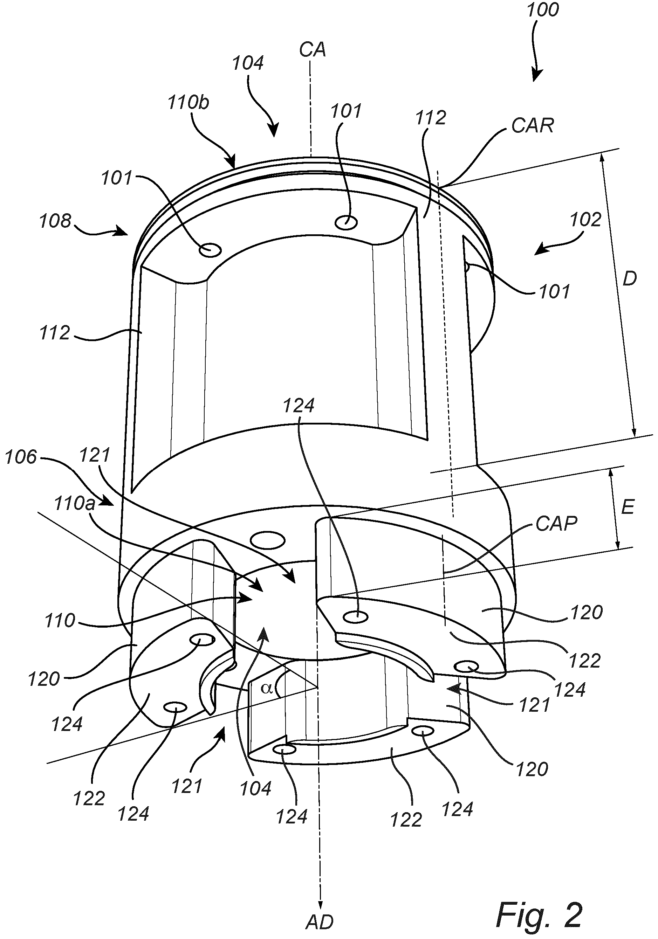

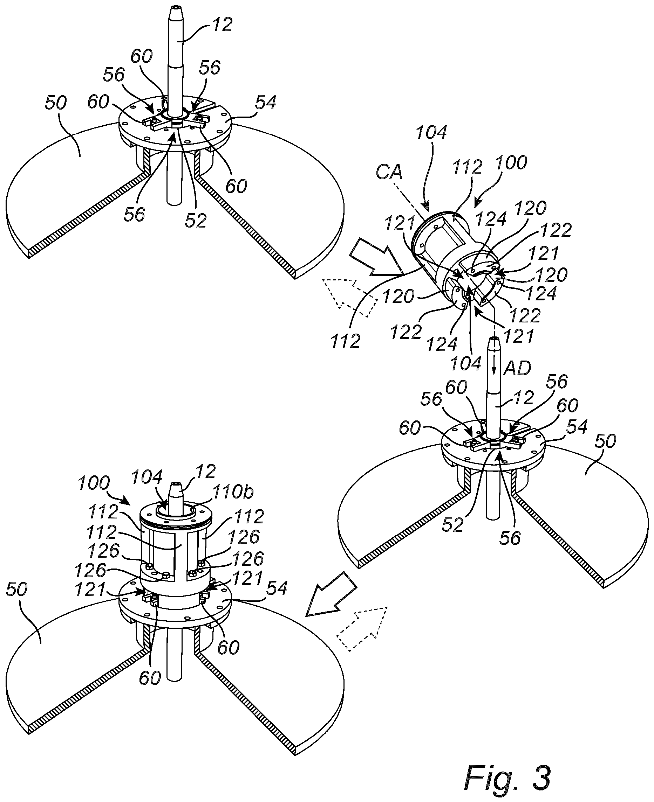

Each agitator system 10 has a bearing housing 100 arranged between the vessel 50 and the drive unit 11. The bearing housing 100 supports the drive unit 11. Thus, the bearing housing 100 holds or fixes the drive unit 11 in relation to the vessel 50. The bearing housing 100 is provided at the interface between the opening 52 in the vessel 50 and the rotary shaft 12. More specifically, the bearing housing 100 has the overall purpose of receiving and rotationally supporting the rotary shaft 12 at the interface between the opening 50 and the rotary shaft 12 via one or more bearings, apart from supporting the drive unit 11. The design of the bearing housing 100 of the agitator systems 10 of Figs. 1A and 1B will be described in more detail further below while referring to Figs. 2 and 3.

During e.g. fabrication of the vessel 50, and service of the agitator system 10, the rotary shaft 12 may have to be releasably fixed in relation to the vessel 50.

In case the rotary shaft 12 has been fixed in relation to the vessel 50 during the fabrication of the vessel 50, it is highly desirable to be able to mount the bearing housing 100 while the rotary shaft 12 is still fixed in relation to the vessel 50. After having mounted the bearing housing, the bearing hosing 100 will rotationally support the rotary shaft 12 in relation to the vessel 50 via one or more bearings, meaning that any fixtures or tools for fixing the rotary shaft 12 in relation to the vessel 50 may be removed once the bearing housing 100 has been mounted in relation to the vessel 50.

Similarly, during service of the agitator system 10, is highly desirable to be able fix the rotary shaft 12 in relation to the vessel 50 without having to remove or move the bearing housing 100 before the rotary shaft 12 has been fixed in relation to the vessel 50.

During such fixing of the rotary shaft 12, the rotary shaft 12 of the agitator system 10 Fig. 1A will in principle not be subjected to any lateral forces since the direction of the rotary shaft 12 coincides with the field of gravity. However, in the side mounted agitator system 10 of Fig. 1B, the rotary shaft 12 will be subjected to lateral forces mainly owing to the fact that the direction of the rotary shaft 12 does not coincide with the field of gravity. Thus, especially in the agitator system 10 of Fig. 1B, it is highly important to be able to fix the rotary shaft 12 firmly in any direction during e.g. fabrication of the vessel 50 and service of the agitator system 10, or else there is an outspoken risk that the rotary shaft 12 will sag in relation to the vessel 50, potentially with fatal or troublesome consequences.

Given this, it is highly desirable to be able to access the rotary shaft 12 when the bearing housing 100 is mounted. Thus, it is highly desirable to be able to access the rotary shaft 12 when the bearing housing 100 rotationally supports the rotary shaft 12 in relation to the vessel 12.

To this end, the bearing housing 100 of Figs. 1A and 1B is designed such that access to the rotary shaft 12 is provided even when the bearing housing 100 mounted.

Now turning to Fig. 2 and Fig. 3. Fig. 2 is a detailed perspective view of the bearing housing 100 used in the agitator systems 10 of Figs. 1A and 1B. Fig. 3 is a sequence of three images illustrating the bearing housing 100 used in the agitator systems 10 of Figs. 1A and 1B at various stages of a mounting operation. In the following, the design of the bearing housing 100 will be described as well as examples of adequate design variations to the bearing housing 100 while referring mainly to Fig. 2, but also to Figs. 1A, 1B and 3.

As already indicated, the bearing housing 100 is designed for receiving and rotationally supporting the rotary shaft 12 of the agitator system 1, where the rotary shaft 12 extends into the vessel 50 through 52 opening in the vessel 50, at the interface between the opening 52 and the rotary shaft 12. Thus, the bearing housing 100 has the overall purpose of supporting and holding the rotary shaft 12 such that the rotary shaft 12 may be rotated about its longitudinal axis by the motor 11a of the drive unit 11 to effect agitation, mixing or blending of the product 2 held in the vessel 50.

It is to be noted that the bearing housing 100, apart from rotationally supporting the rotary shaft 12 may serve additional purposes. For instance, the bearing housing 100 may be configured to support the drive unit 11. To this end, the bearing housing 100 may be provided with a set of mounting holes 101 configured to receive a respective fixing element, such as a screw for fixing the drive unit 11 in relation to the bearing housing 100, i.e. as illustrated in Figs. 1A and 1B. Further, the bearing housing 100 may for instance be configured to seal the interface between the opening 52 and the rotary shaft 12. To this end, the bearing housing 100 may be provided with one or more stationary seals and one or more rotary seals (not shown). However, such stationary seals and rotary seals may be provided on other components of the agitator system 10 than the bearing housing 100. Given this, such stationary seals and rotary seals will not be described any further.

As best illustrated in Fig. 2, the depicted bearing housing 100 comprises a body 102. The body 102 comprises a shaft aperture 104. The shaft aperture 104 extends along an axial direction AD of the body 102. The shaft aperture 104 extends between a first end portion 106 and a second end portion 108 of the body 102. Thus, the shaft aperture 104 extends between opposite ends of the body 102, such that the shaft aperture 104 forms a passage which extends between the first end portion 106 and the second end portion 108 of the body 102. The shaft aperture 104 is configured to receive the rotary shaft 12, as illustrated e.g. in Fig. 3. The depicted shaft aperture 104 has a circular cross-section as seen along the axial direction AD of the body 102. However, the shaft aperture 104 may have other shapes than the circular. For instance, the shaft aperture may have a square, a rectangular, a triangular, an oblong, an oval, or an elliptical cross-section to give a few non-limiting examples.

Further, the shape and size of the shaft aperture 104 may vary along the axial direction AD of the body 102. This means that the shape and/or the size of the cross-section of the shaft aperture 104 may vary along the axial direction AD of the body 102.

As already indicated, the bearing housing 100 is designed for receiving and rotationally supporting the rotary shaft 12 via one or more bearings. To this end, the shaft aperture 104 of the depicted bearing housing 100 is at least partially defined by an internal surface 110. The internal surface 110 is configured to rotationally support the rotary shaft 12 via one or more bearings (not shown). As illustrated in Fig. 2, the internal surface 110 may circumscribe the shaft aperture 104 completely, meaning that the rotary shaft 12 will be completely surrounded by the internal surface 110 when received in the shaft aperture 104.

However, the internal surface 110 may partially circumscribe the shaft aperture 104 and still be configured to rotationally support the rotary shaft 12 via one or more bearings.

In the depicted bearing housing 100 of Fig. 2, the internal surface 110 comprises a first internal surface portion 110a. The first internal surface portion 110a of the depicted bearing housing 100 is located in proximity to the first end portion 106 of the body 102. The first internal surface portion 110a circumscribes the shaft aperture 104. The first internal surface portion 110a of Fig. 2 is configured to bear against a first bearing assembly (not shown) for rotationally supporting the rotary shaft 12. Further, In the depicted bearing housing 100 of Fig. 2, the internal surface 110 comprises a second internal surface portion 11 0b, best illustrated in Fig. 3, lower left image. The second internal surface portion 110b of the depicted bearing housing 100 is located in proximity to the second end portion 108 of the body 102. Thus, the second internal surface portion 110b is arranged at a distance D from the first internal surface portion 110a along the axial direction AD of the body 102. The approximate distance D between the first and second internal surface portions 110a, 110b is schematically indicated by a vertical double arrow in Fig. 2 although the second internal surface portion is not visible as such in Fig. 2. The second internal surface portion 110b circumscribes the shaft aperture 104, like the first internal surface portion 110a. The second internal surface portion 110b of Fig. 2 is configured to bear against a second bearing assembly (not shown) for rotationally supporting the rotary shaft 12.

It is to be noted that the bearing housing 100 may be designed and hence configured to support the rotary shaft 12 via any number of bearings and/or bearing assemblies. Such of bearings and/or bearing assemblies may be directly supported by the bearing housing 100 or may be indirectly supported by the bearing housing 100 via for instance a seal, spacer element, a damping element or similar.

The bearing housing of Fig. 2 comprises three protrusions 120. The protrusions 120 protrude from the first end portion 106. More specifically, the protrusions 120 protrude along the axial direction AD of the body 102. The protrusions of the depicted bearing housing 100 are circumferentially distributed around the shaft aperture 104. The protrusions of the depicted bearing housing 100 are circumferentially evenly distributed around the shaft aperture 104. Each protrusion 120 comprises an abutment surface 122. The abutment surface 122 of each protrusion 120 faces away from the first end portion 106 as seen along the axial direction AD. Further, each abutment surface 122 is designed and hence configured to abut an outer surface portion 56 associated with the vessel 50, as best illustrated in Fig. 3. Such surface portion 56 associated with the vessel 50 may as described above for instance be a surface portion the vessel 50 itself, or a surface portion of a flange 54, a duct, or similar mounted to the vessel 50. In Fig. 3, it is schematically illustrated how the flange 54 is mounted to the vessel 50, and how the flange 54 defines the opening 52 in the vessel 50. Such flange 54 may for instance be welded, bolted or riveted to the vessel 50. Thus, each abutment surface 122 may, as illustrated in Figs. 2 and 3 be configured to be connected to and bear against a flange 54 circumscribing the opening 52 in the vessel 50.

By the above design of the protrusions 120, a radially extending passage 121 is formed between adjacent protrusions 120 when the abutment surfaces 122 abut a surface. More specifically, by the above design of the protrusions 120, a radially extending passage 121 is formed between adjacent protrusions 120 when the abutment surfaces 122 abut the outer surface portion 56 associated with the vessel 50. Thus, the so formed radially extending passages 121 each allow access to the rotary shaft 12. In this way, the rotary shaft 12 may be accessed via the radially extending passages 121 when the bearing housing is mounted. Thus, the rotary shaft 12 may be accessed via the radially extending passages 121 when the bearing housing is fixed in relation to the vessel 50 and the opening 52 in the vessel 50.

It is to be noted that the bearing housing 100 may comprise two or more protrusions 120. Thus, the bearing housing may for instance have 2, 3, 4, 5, 6, or 10 protrusions 120 to give a few non-limiting examples.

It is further to be noted that the protrusions 120 may be distributed around or about the shaft aperture 104 in any suitable manner. The protrusions 120 may be evenly distributed around the shaft aperture 104. The protrusions 120 may be unevenly distributed around the shaft aperture 104. A distance between adjacent protrusions 120 may be the same as in the bearing housing 100 of Fig. 2. However, the distance between adjacent protrusions may vary.

The protrusions 120 are integrally formed with the body 102 in the depicted bearing housing 100 of Figs. 2 and 3. However, one of more of the protrusions 120 may be formed as a separate part or detail. Thus, as an example, one, two, three, or all protrusions 120 may be formed as a separate part or detail. Correspondingly, as an example, one, two, three, or all protrusions 120 may be integrally formed with the body 102. Thus, the bearing housing 100 may be formed as a single piece.

The depicted bearing housing 100 of Fig. 2 is formed by being machined from a metal material. That is, the body 102 and the protrusions 120 are formed by being machined from a metal material. Suitable metal materials for the bearing housing 100, include aluminum, alloy steels and stainless steel to give a few non limiting examples. Other materials are however conceivable, such as nickel-based alloys, fiber reinforced plastics or similar.

The present inventors have found that a sturdy and stable bearing housing 100 may be realized when each protrusion 120 of the bearing housing 100 extends over an angle α in a range of 20 to 90 degrees as seen from a central axis CA of the bearing housing 100 in a plane perpendicular to the axial direction AD. Thus, when each protrusion 120 of the bearing housing 100 extends over an angle α in a range of 20 to 90 degrees, the bearing housing 100 may be rigidly fixed in relation to the vessel 50 with a limited risk of the bearing housing 100 being flexed or getting damaged, while still providing an adequate access to the rotary shaft 12 via the radially extending passages 121 being formed.

It is currently believed that an optimal balance between the stability of the bearing housing 100 and the access to the rotary shaft 12 is achieved when each protrusion 120 of the bearing housing 100 extends over an angle α in a range of 50 to 80 degrees as seen from a central axis CA of the bearing housing 100 in a plane perpendicular to the axial direction AD. This holds particularly true when the bearing housing 100 has three protrusions 120.

The present inventors have found that a sturdy and stable bearing housing 100 with an adequate access to the rotary shaft may be realized when each protrusion 120 of the bearing housing 100 has an extension E along the axial direction AD in a range of 20 mm to 100 mm.

It is currently believed that an optimal balance between the stability of the bearing housing 100 and the access to the rotary shaft 12 is achievable when each protrusion 120 of the bearing housing 100 has an extension E along the axial direction AD in a range of 30 mm to 60 mm. This holds particularly true when the diameter of the rotary shaft 12 lies in a range of 25-55 mm.

The body 102 may, as best illustrated in Fig. 2, comprise a radially outer reinforcement rib 112 for each protrusion 120. The radially outer reinforcement rib 112 may to advantage extend along the axial direction AD, between the axial position of the first internal surface portion 110a and the axial position of the second internal surface portion 110b. In this way the bearing housing 100 may be reinforced at the locations where the respective bearing assemblies interact with the bearing housing, such that a strong bearing housing 100 is realized. Thus, by the provision of the outer reinforcement ribs 112 flexing of the bearing housing 100 may be counteracted.

A central axis CAR of a reinforcement rib 112 may as illustrated in Fig. 2 coincide with a central axis CAP of an associated protrusion 120 as seen along the axial direction AD. In this way, forces that the bearing housing 100 is subjected to may be accounted for and distributed to the vessel 50 via the reinforcement ribs 112 and the protrusions 120 with a reduced risk of the bearing housing 100 flexing.

Now turning in particular to Fig. 3. Fig. 3 illustrates a sequence of images schematically showing how the above-described bearing housing 100 is attached or mounted to the flange 54 fixed to the vessel 50. The order of the images when bearing housing 100 is attached the flange 54 and hence to the vessel 50 is indicated by the solid line arrows of Fig. 3.

The upper left image of Fig. 3 illustrates how the rotary shaft 12 is fixed in relation to the opening 52 by means of a set of tools 60. More specifically, the rotary shaft 12 is fixed in relation to the opening 52 in the vessel 50 by a set of tools 60 in form of fixture elements 60. The fixture elements 60 are configured to jointly fix the rotary shaft 12 in relation to the opening 52 by engaging the rotary shaft 12 such that the rotary shaft 12 is clamped between the fixture elements 60, as best illustrated in the upper left image of Fig. 3.

In order to mount the bearing housing 100 to the flange 54, the bearing housing 100 is lowered towards the flange 54 along the axial direction AD while the rotary shaft 12 is received in the shaft aperture 104, as illustrated in the right image of the Fig. 3. In this way, the rotary shaft 12 becomes supported via the one or more bearings provided in the bearing housing 100, i.e. in line with what has been described above.

Further, the bearing housing 100 is lowered onto the flange 54 such that the abutment surfaces 122 of the protrusions 120 abut the outer surface portion 56 associated with the vessel 50. In other words, the abutment surfaces 122 of the protrusions 120 abut the flange 54, as best illustrated in the lower left image of Fig. 3.

As clearly illustrated in the lower left image of Fig. 3, a respective fixture element 60 extend through each passage 121 being formed between adjacent protrusions 120. Thus, the bearing housing 100 may be mounted or fixed to the flange 54, and hence in relation to the vessel 50, while the rotary shaft 12 is fixed in relation to the opening 52 in the vessel 50. When the bearing housing 100 has been mounted to the flange 54, the fixture elements 60 may be removed since the rotary shaft 12 is now rotationally supported in relation to the vessel 50 via the one or more bearings and the bearing housing 100.

In order to attach, mount or fix the bearing housing 100 to e.g. the flange 54, each protrusion 120 of the bearing housing 100 may be provided with an attachment hole 124 extending along the axial direction AD. Each attachment hole 124 may to advantage be configured to receive an attachment screw 126 for attaching the bearing housing 100 to the flange 54 and hence to the vessel 50, as best illustrated in Fig. 2 in combination with the lower left image of Fig. 3.

Fig. 3 is also useful for understanding how the bearing housing 100 may be removed from the flange 54 and hence from the vessel 50 during e.g. service. In this regard, the order of the images are the opposite as indicated by the hatched arrows in Fig. 3. In such case, when the bearing housing 100 is to be removed, the rotary shaft 12 may initially be fixed in relation to the opening by the tools 60, in form of fixture elements 60, as have been described above. Thereafter, the attachment screws 126 may be removed and the bearing housing may be lifted away as illustrated in Fig. 3 while following the image sequence as illustrated by the hatched arrows.

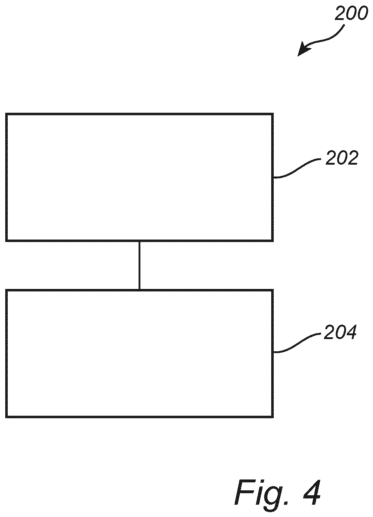

Now turning to Fig. 4. Fig 4 is a flow chart of a method 200 of mounting a bearing housing 100 of the above-described kind at an interface between an opening 52 in a vessel 50 and a rotary shaft 12 extending into the vessel 50 through the opening 52, wherein the rotary shaft 12 is releasably fixed in relation to the opening 52 by two or more tools 60, such as fixture elements 60, circumferentially distributed around the opening 52 and jointly fixing the rotary shaft 12 in relation to the opening 52.

The method 200 comprises positioning 202 the bearing housing 100 at the opening 52 such that the rotary shaft 12 is received at the shaft aperture 104, and each abutment surface 122 abuts an outer surface portion 56 associated with the vessel 50, and a respective tool 60 is received in each radially extending passage 121 being formed between adjacent protrusions 120. In this way, the bearing housing 100 may be positioned on the outer surface portion 56 associated with the vessel 50 although the rotary shaft 12 is fixed in relation to the opening 52 by the tools 60.

The method 200 proceeds by fixing 204 the bearing housing 100 to the vessel 50, thereby rotationally supporting the rotary shaft 12. In this way, the rotary shaft 12 is supported in relation to the opening 53 and hence the vessel 50. Thus, the tools 60 may be removed since the rotary shaft 12 is thus supported via the bearing housing 100.

It will be appreciated that the present inventive concept is not limited to the variants and examples shown. Several modifications and variations are thus conceivable within the scope of the invention which thus is defined by the appended claims.

## Claims

1. A bearing housing (100) for receiving and rotationally supporting a rotary shaft (12) of an agitator system (10) extending into a vessel (50) through an opening (52) in the vessel (50) at an interface between the opening (52) and the rotary shaft (12), the bearing housing (100) comprising:
a body (102) comprising a shaft aperture (104) extending along an axial direction (AD) of the body (102) between a first end portion (106) and a second end portion (108) of the body (102), the shaft aperture (102) being configured to receive the rotary shaft (12), and being at least partially defined by an internal surface (110) at least partially circumscribing the shaft aperture (12), wherein the internal surface (110) is configured to rotationally support the rotary shaft (12) via one or more bearings, and
two or more protrusions (120) protruding from the first end portion (106) along the axial direction (AD), and being circumferentially distributed around the shaft aperture (102), each protrusion (120) comprising an abutment surface (122) facing away from the first end portion (106) as seen along the axial direction (AD) and being configured to abut an outer surface portion (56) associated with the vessel (50), such that a radially extending passage (121) allowing access to the rotary shaft (12) is formed between adjacent protrusions (120) when the abutment surfaces (122) abut the outer surface portion (56) associated with the vessel (50).

2. The bearing housing (100) according to claim 1, wherein the body (102) and the two or more protrusions (120) are integrally formed.

3. The bearing housing (100) according to claim 1 or 2, wherein the body (102) and the two or more protrusions (120) are machined from a metal material, such as aluminum, an alloy steel or a stainless steel.

4. The bearing housing (100) according to any one of the preceding claims,
wherein the abutment surface (122) is configured to be connected to and bear against a flange (54) circumscribing the opening (52) in the vessel (50).

5. The bearing housing (100) according to any one of the preceding claims,
wherein each protrusion (120) comprises an attachment hole (124) extending along the axial direction (AD), the attachment hole (124) being configured to receive an attachment screw (126) for attaching the bearing housing (100) to the vessel (50).

6. The bearing housing (100) according to any one of the preceding claims,
wherein each passage (121) is configured to receive a tool (60), such as a fixture element (60), for holding the rotary shaft (12) in relation to the vessel (50).

7. The bearing housing (100) according to any one of the preceding claims,
wherein each protrusion (120) extends over an angle (α) in a range of 20 to 90 degrees, such as 50 to 80 degrees, as seen from a central axis (CA) of the bearing housing (100) in a plane perpendicular to the axial direction (AD).

8. The bearing housing (100) according to any one of the preceding claims,
wherein each protrusion (120) has an extension (E) along the axial direction (AD) in a range of 20 mm to 100 mm, such as 30 mm to 60 mm.

9. The bearing housing (100) according to any one of the preceding claims,
wherein the shaft aperture (102) has a circular cross-section as seen along the axial direction (AD).

10. The bearing housing (100) according to claim 9, wherein the internal surface (110) comprises a first internal surface portion (110a) circumscribing the shaft aperture (102), wherein the first internal surface portion (110a) is configured to bear against a first bearing assembly for rotationally supporting the rotary shaft (12).

11. The bearing housing (100) according claim 10, wherein the internal surface (110) comprises a second internal surface portion (110b) circumscribing the shaft aperture (102), the second internal surface portion (110b) being arranged at a distance (D) from the first internal surface portion (110a) along the axial direction (AD), wherein the second internal surface portion (110b) is configured to bear against a second bearing assembly for rotationally supporting the rotary shaft (12).

12. The bearing housing (100) according to claim 11, wherein the body (102) comprises, for each protrusion (120), a radially outer reinforcement rib (112) extending along the axial direction (AD) between an axial position of the first internal surface portion (110a) and an axial position of the second internal surface portion (110b).

13. The bearing (100) housing according to claim 12, wherein a central axis (CAR) of a reinforcement rib (112) coincides with a central axis (CAP) of an associated protrusion (120) as seen along the axial direction (AD).

14. The bearing housing (100) according to any one of the preceding claims,
wherein the two or more protrusions (120) comprises three or more protrusions (120).

15. An agitator (10) system for mixing a liquid product (2) held in a vessel (50), the agitator system (10) comprising:
a rotary shaft (12) provided with one or more impellers (14) configured to mix the liquid product (2),
a drive unit (11) coupled to the rotary shaft (12) and configured to rotate the rotary shaft (12), and
a bearing housing (100) according to any one of the preceding claims, the bearing housing (100) receiving and rotationally supporting the rotary shaft (100) at an interface between an opening (52) in the vessel (50) and the rotary shaft (12) and supporting the drive unit (11).

16. A mixing arrangement (1) for mixing a liquid product (2), the mixing arrangement (1) comprising:
a vessel (50) configured to hold the liquid product (2), and
an agitator system (10) according to claim 15, wherein the rotary shaft (12) extends into the vessel (50) through the opening (52) such that the one or more impellers (14) are located in the vessel (50), and the drive unit (11) is located outside of the vessel (50).

17. A method (200) of mounting a bearing housing (100) according to any one of claim 1 to 14 at an interface between an opening (52) in a vessel (50) and a rotary shaft (12) extending into the vessel (50) through the opening (52), wherein the rotary shaft (12) is releasably fixed in relation to the opening (52) by two or more tools (60), such as fixture elements (60), circumferentially distributed around the opening (52) and jointly fixing the rotary shaft (12) in relation to the opening (12), the method (200) comprising:
positioning (200) the bearing housing (200) at the opening (52) such that the rotary (12) shaft is received at the shaft aperture (104), and each abutment surface (122) abuts an outer surface portion (56) associated with the vessel (50), and a respective tool (60) is received in each radially extending passage (121) being formed between adjacent protrusions (121), and
fixing (204) the bearing housing (100) to the vessel (50), thereby rotationally supporting the rotary shaft (12).
